**Europäisches Patentamt**

(19) **European Patent Office**

**Office européen des brevets**

(11) Veröffentlichungsnummer: **0 046 492**
**B1**

(12) # EUROPÄISCHE PATENTSCHRIFT

(45) Veröffentlichungstag der Patentschrift:
21.12.83

(51) Int. Cl.³: **B 65 G 49/04**

(21) Anmeldenummer: 81105193.7

(22) Anmeldetag: 04.07.81

(54) Vorrichtung zum Manipulieren, insbesondere zum Aufstapeln oder Entstapeln von Gegenständen, insbesondere Glasscheiben.

(30) Priorität: 22.08.80 DE 3031653

(43) Veröffentlichungstag der Anmeldung:
03.03.82 Patentblatt 82/9

(45) Bekanntmachung des Hinweises auf die Patenterteilung:
21.12.83 Patentblatt 83/51

(84) Benannte Vertragsstaaten:
AT BE CH DE FR GB IT LI LU NL SE

(56) Entgegenhaltungen:
DE - A - 2 130 592
DE - A - 2 516 884
DE - B - 1 155 396
US - A - 3 279 664
(73) Patentinhaber: Olbricht, Eduard, Hoher Weg 2,
D-4294 Isselburg (DE)

(72) Erfinder: Olbricht, Eduard, Hoher Weg 2,
D-4294 Isselburg (DE)

(74) Vertreter: Niemann, Uwe, Dr.-Ing., Ahornstrasse 41,
D-4300 Essen 1 (DE)

## Vorrichtung zum Manipulieren, insbesondere zum Aufstapeln oder Entstapeln von Gegenständen, insbesondere Glasscheiben

Die Erfindung betrifft eine Vorrichtung zum Manipulieren, insbesondere zum Aufstapeln von Gegenständen, insbesondere Glasscheiben, mit wenigstens einem an einem Rahmen angeordneten Greifwerkzeug (Sauger), das zwischen einer im wesentlichen horizontalen Endstellung und einer im wesentlichen vertikalen Endstellung durch Schwenken und Verschieben hin- und herbeweglich ist, wobei als Antrieb für den Rahmen wenigstens eine Kurbel mit zugeordneter Schubstange vorgesehen ist und der Rahmen fest mit der Schubstange verbunden ist.

Mit einer derartigen Vorrichtung werden z. B. gestapelte Glasscheiben, deren Scheibenebenen sich im wesentlichen in vertikaler Richtung erstrecken, nacheinander vom Stampel abgenommen und auf einem Förderer mit im wesentlichen horizontaler Förderebene abgelegt. Dazu werden die Sauger an die jeweils oberste Glasscheibe herangebracht, so daß sie diese erfassen können. Da die Scheiben des Stampels mehr oder weniger aneinanderhaften, muß darauf geachtet werden, daß die oberste Scheibe sich von den übrigen Scheiben des Stampels löst. Das kann z. B. dadurch erreicht werden, daß die Scheibe zunächst ein kurzes Stück in Richtung ihrer Scheibenebene bewegt wird, bevor sie vom Stampel abgehoben und in die Förderebene geschwenkt wird.

Bei einer bekannten Vorrichtung der eingangs beschriebenen Gattung (DE-OS 2 516 884) wird das dadurch erreicht, daß der Rahmen mit den Saugern um eine im wesentlichen horizontale Achse schwenkbar gelagert ist, wobei die Schubstange am Rahmen oder an einer mit dem Rahmen verbundenen Konsole gelenkig angreift. Die von den Saugern erfaßten Scheiben werden dann über einen Winkel von ca. 90 Grad geschwenkt und abgelegt. Beim Ablegen befinden sich die Sauger allerdings an der Unterseite der Scheibe, die dementsprechend beim Entstapeln gleichzeitig auch gewendet werden. Anders ausgedrückt werden die bisherigen Oberseiten der Scheiben nunmehr zu Unterseiten. Das ist unerwünscht. Ein anderer Nachteil der bekannten Vorrichtung wird darin gesehen, daß die bewegten Massen verhältnismäßig groß sind und daß deshalb die Taktzeiten dieser Vorrichtung sehr lang sein müssen.

Andere bekannte Vorrichtungen, bei denen die Sauger von Scheren geführt sind (DE-OS 2 025 203) oder bei denen die Sauger an einem schienengeführten Rahmen angeordnet sind (GB-PS 1 284 143), können wegen großer bewegter Massen und mit großem konstruktiven Aufwand und großer Leistung verwirklicht werden.

Aufgabe der Erfindung ist es, eine Vorrichtung der eingangs beschriebenen Gattung mit relativ geringen bewegten Massen anzugeben, die kurze Taktzeiten bei exakter Positionierung der aufgestapelten bzw. entstapelten Platten zuläßt.

Diese Aufgabe wird dadurch gelöst, daß die Schubstange am Ende der Kurbel schwenkbar gelagert ist und daß die Schubstange längsverschieblich in einem Drehgelenk mit außerhalb des Kurbelkreises angeordneter Drehachse gelagert ist.

Es versteht sich, daß auch zwei oder mehr parallel geführte Kurbeln mit zugeordneten Schubstangen als Antrieb für den Rahmen eingesetzt werden können, wenn das aus statischen Gründen und zur sicheren Führung des Rahmens mit von den Saugern erfaßten Glasscheiben erforderlich ist. Auf jeden Fall sind bei der erfindungsgemäßen Vorrichtung die bewegten Massen vergleichsweise klein, weil lediglich die Kurbel, die Schubstange sowie der Rahmen mit der Glasscheibe bewegt werden müssen. Durch Längsführung der Schubstange in einem Drehgelenk (Drehschiebegelenk) wird eine Kinematik verwirklicht, die allen Anforderungen zum Manipulieren, insbesondere beim Aufstapeln oder Entstapeln von Glasscheiben gerecht wird Eine wesentliche Aufgabe der Kinematik ist, daß die Glasscheiben im Bereich ihrer vertikalen Endlage im eingangs beschriebenen Sinne geführt werden, daß nämlich beim Entstapeln zunächst eine Bewegung in Richtung der Scheibenebene ausgeführt wird, bevor die Scheibe vom Stapel entfernt wird. Ähnliches gilt umgekehrt auch beim Aufstapeln.

Diese Verhältnisse lassen sich insbesonders dann verwirklichen, wenn die Kurbel in einem Koordinatensystem, dessen Koordinatenmittelpunkt auf der Kurbelachse liegt, eine hin- und hergehende Drehbewegung zwischen 0 Grad und ca. 270—300 Grad ausführt, wobei die horizontale Endlage der Kurbel der horizontalen Endstellung der Sauger und die im wesentlichen vertikale Endlage der Kurbel der im wesentlichen vertikalen Endstellung der Sauger entspricht.

Der Kurvenzug der Bewegungsbahn hängt im wesentlichen von der Lage des Drehgelenkes relativ zur Kurbelachse ab. Wichtig ist, daß das Drehgelenk außerhalb des Kurbelkreises angeordnet ist. Wenigstens der horizontale Abstand des Drehgelenkes von der vertikalen Koordinatenachse kann gleich dem Kurbelradius sein, womit dann die horizontale Endstellung der Sauger bei horizontaler Endlage der Kurbel definiert ist. Der vertikale Abstand des Drehgelenkes von der horizontalen Koordinatenachse bestimmt zusammen mit der jeweiligen im wesentlichen vertikalen Endlage der Kurbel den Kurvenzug, auf dem die Scheibe vom Stapel weggeführt wird bzw. an diesen herangeführt wird. Vorzugsweise sollte der vertikale Abstand des Drehgelenks von der horizontalen Koordinatenachse gleich dem 1,0—1,2fachen insbesondere gleich dem 1,117fachen des Kurbelradius sein. In diesem Zusammenhang empfiehlt sich eine Ausführungsform, bei der der Abstand der Saugerebene vom Kurbelzapfen das 3,25fache des Kurbelradius ist.

Das gilt jedenfalls für Ausführungsformen, bei denen die Stellebene, der z. B. ein Palettenboden im wesentlichen vertikal gestapelten Glasscheiben im wesentlichen mit der Förderebene übereinstimmt. Zur Steuerung der Kurbel können Endschalter und/oder Anschläge für die Endlagen der Kurbel vorgesehen sein.

Zur jeweiligen Anpassung an unterschiedliche Schräglagen der Scheibenstapel kann es zweckmäßig sein, wenn die Sauger an einem Stellrahmen angebracht sind, der seinerseits um eine zur Kurbelachse parallele Achse schwenkbar am Rahmen gelagert ist, wobei zwischen Rahmen und Stellrahmen eine Stelleinrichtung angeordnet ist. Bei der Stelleinrichtung kann es sich um einen Hubzylinder oder um eine elektromagnetische Stelleinrichtung handeln.

Sollen mit der Vorrichtung sehr große und sehr schwere Glasscheiben entstapelt bzw. aufgestapelt werden, dann können sich wegen des vorgegebenen Bewegungsablaufes Beschleunigungs- oder Verzögerungsphasen ergeben, die mit Rücksicht auf die größeren bewegten Massen nur von einem Antriebsmotor erhöhter Leistung bewältigt werden können. Die sich daraus ergebenden Schwierigkeiten, auch zu große Geschwindigkeiten der Glasscheibe, können dadurch überwunden werden, daß die Kurbel einen Antrieb aufweist, der in Abhängigkeit von der jeweiligen Kurbellage und von einem vorgebbaren Programm regelbar ist. Dazu wird die Drehgeschwindigkeit der Kurbel abgenommen und dem Regler zugeführt, der den Antriebsmotor unter Berücksichtigung der vertretbaren Lasten und Geschwindigkeiten steuert. Als Sollwerteingabe für den Regler kann eine mit der Kurbel gekoppelte Kurvenscheibe eingesetzt werden.

Die insoweit beschriebene Vorrichtung besteht aus vergleichsweise wenigen Einzelteilen und weist insbesondere vergleichsweise geringe bewegte Massen auf. Sie beansprucht darüberhinaus auch vergleichsweise geringen Raum und besitzt ein so geringes Gewicht, daß es ohne weiteres möglich ist, den Kurbelmechanismus mit Rahmen und Saugern an einem Transferwagen aufzuhängen, der auf einem Gerüst verfahrbar ist. Dabei sind die Einsatzmöglichkeiten der Vorrichtung und ihre Anpassung an die jeweils gegebenen Umstände verbessert.

Eine weitere Vergrößerung der Einsatzmöglichkeiten erhält man dann, wenn zwischen Transferwagen und Kurbelmechanismus ein Drehgelenk mit vertikaler Drehachse angeordnet ist. Dann kann nämlich die über einem Horizontalförderer angeordnete Vorrichtung von und nach beiden Seiten des Horizontalförderers arbeiten.

Es besteht aber auch die Möglichkeit, die Vorrichtung, d. h., den Kurbelmechanismus mit Rahmen und Saugern auf einem fahrbaren Gestell anzuordnen, wobei am Gestell ein Ständer angeordnet und der Kurbelmechanismus mit Rahmen und Saugern an diesem Gestell vertikal verstellbar ist. Eine solche Ausführungsform kann praktisch an das Ende jedes Horizontalförderers herangefahren werden und von entsprechend angeordneten Scheibenstapeln Einzelscheiben abnehmen sowie auf den Förderer legen. Ebenso ist der umgekehrte Vorgang möglich, wenn die Vorrichtung einzelne Scheiben vom Förderer aufnimmt und stapelt.

Wenn keine Möglichkeit besteht, die Vorrichtung mit dem fahrbaren Gestell oberhalb des Horizontalförderers anzuordnen, kann am Gestell auch ein höhenverstellbarer Förderabschnitt angeordnet werden, der in Höhe des weiterführenden Horizontalförderers eingestellt wird und auf den die entstapelten Scheiben abgelegt werden, bevor sie dem Horizontalförderer übergeben werden.

Zusätzlich kann das Gestell auch eine Plattform zur Aufnahme eines palettierten Stapels aufweisen, wobei die Plattform in Richtung auf die in vertikaler Endstellung befindlichen Sauger zustellbar ist. Die Zustellung ist deshalb erforderlich, weil die Sauger vom Kurbelmechanismus immer nur in eine bestimmt im wesentlichen vertikale Ebene geführt werden, während die Dicke des Scheibenstapels mit zunehmender Entstapelung abnimmt.

Im folgenden werden in der Zeichnung dargestellte Ausführungsbeispiele der Erfindung erläutert; es zeigt

Fig. 1 in schematischer Darstellung eine Seitenansicht einer Vorrichtung zum Aufstapeln oder Entstapeln von Glasscheiben,

Fig. 2 eine Stirnansicht des Gegenstandes nach Fig. 1,

Fig. 3 eine andere Ausführungsform des Gegenstandes nach Fig. 1.

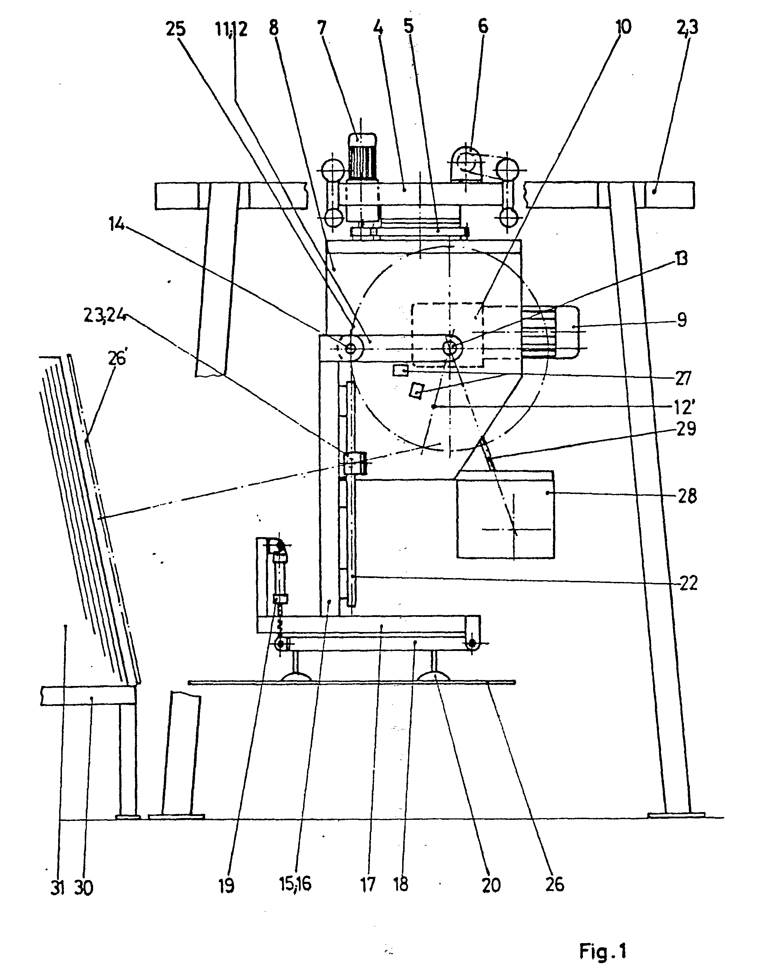

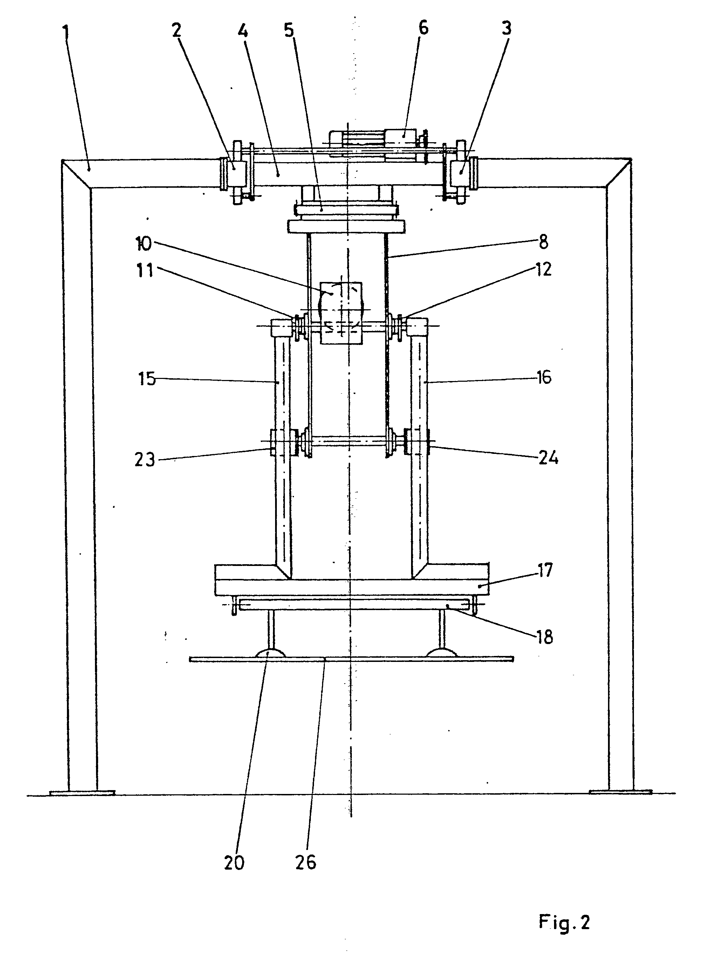

In den Fig. 1 und 2 ist ein Gerüst 1 dargestellt, das oben zwei Schienen 2, 3 und einen daran verfahrbaren Transferwagen 4 aufweist. Der Transferwagen 4 trägr an seiner Unterseite einen Drehkranz 5, an dessen drehbarem Teil die Vorrichtung zum Aufstapeln bzw. Entstapeln ist. Der Transferwagen 4 und der Drehkranz 5 sind von gesonderten Antriebsmotoren 6 bzw. 7 gesteuert antreibbar.

Die Vorrichtung weisen ein Gehäuse 8 auf, an oder in dem ein Antriebsmotor 9 gelagert ist, der über ein Getriebe 10 zwei parallel geführte Kurbeln 11, 12 antreibt, die mit gemeinsamer Kurbelachse 13 außen an gegenüberliegenden Gehäusen 8 gelagert sind. An den freien Enden der Kurbeln 11 bzw. 12 befinden sich jeweils im gleichen Abstand von der Kurbelachse 13 Kurbelzapfen 14, an denen Schubstangen 15 bzw. 16 schwenkbar gelagert sind. Die Schubstangen 15 und 16 sind an ihren freien Enden mit einem Rahmen 17 fest verbunden, dessen Rahmenebene etwa senkrecht der zur Längsachse der Schubstangen 16 bzw. 17 angeordnet ist. Am Rahmen 17 ist einseitig ein Stellrahmen 18 schwenkbar gelagert, der an der anderen Seite über einen pneumatisch oder hydraulisch betätigbaren Hubzylinder 19 am Rahmen 17 abgestützt ist.

Am Stellrahmen 18 sind mehrere Sauger 20, ein Teil davon verstellbar, angebracht. Die Sauger 20 stehen über nicht dargestellte Verbindungsleitungen mit einer ebenfalls nicht dargestellten Unterdruckeinrichtung in Verbindung.

Mit den Schubstangen 15, 16 verbunden sind Führungsstangen 22, die sich parallel zu den Schubstangen 15, 16 erstrecken. Diese Führungsstangen 22 sind in zugeordneten Drehschiebelagern 23, 24 geführt, die jeweils an den Außenseiten des Gehäuses 8 angebracht sind. Bei den Drehschiebelagern 23 und 24 handelt es sich um drehbare am Gehäuse 8 gelagerte Konsolen, die jeweils eine Stangenführung tragen. In diesen Stangenführungen sind die Führungsstangen 22 in achsialer Richtung verschieblich. Die Drehschiebelager 23, 24 sind außerhalb eines durch die Bewegung des Kurbelzapfens 14 definierten Kurbelkreises 25 angeordnet. Bei der dargestellten Ausführungsform ist die Anordnung im einzelnen so, daß bei der dargestellten horizontalen Endstellung der Kurbelarme 11, 12 die Drehschiebelager 23, 24 vertikal unterhalb der Kurbelzapfen 14 angeordnet sind. Der Abstand der Drehschiebelager 23, 24 in dieser Stellung von den Kurbelzapfen 14 entspricht dem 1,117fachen des Kurbelradius.

Die Kurbeln 11, 12 können zwischen der in Fig. 1 mit ausgezogenen Linien dargestellten, horizontalen Endlagern über einen Winkel von ca. 270—300 Grad, beim dargestellten Ausführungsbeispiel 285 Grad, bis in eine im wesentlichen vertikale Endlage geschwenkt werden, die bei dem in Fig. 1 dargestellten Ausführungsbeispiel durch die mit strichpunktierten Linien bezeichnete Kurbel 12' angedeutet ist. Bei dieser im wesentlichen vertikalen Endlage der Kurbel 12' befindet sich die Saugerebene in der durch die Glasscheibe 26' angedeuteten Lage.

Die jeweiligen Endlagen der Kurbeln 11, 12 sind einerseits durch Anschläge 27 sowie andererseits durch nicht dargestellte Endschalter definiert. Die Endschalter befinden sich in einem an das Gehäuse 8 angeschlossenen Kasten 28, in den sich eine getrieblich mit den Kurbeln 11, 12 verbundene Welle 29 erstreckt, die die jeweilige Drehgeschwindigkeit und die Schwenklage der Kurbeln 11, 12 abbildet. Mit innerhalb des Kastens 28 auf der Welle 29 angeordneten Nocken können dann entsprechende Endschalter betätigt werden.

Die Welle 29 ist darüberhinaus innerhalb des Kastens 28 an eine Kurvenscheibe angekoppelt, die als Sollwerteingabe für einen nicht dargestellten Regler dient, der die Drehzahl des Antriebsmotors 9 für die Kurbeln 11, 12 regelt. Über diesen Regler kann bei geeigneter Auswahl der Kurvenscheibe die Drehgeschwindigkeit der Kurbeln 11, 12 so geregelt werden, daß Verzögerungen oder Beschleunigungen bzw. Geschwindigkeiten der von den Saugern 20 erfaßten Glasscheibe 26 innerhalb gewünschter Grenzen bleiben.

Die dargestellte Vorrichtung arbeitet wie folgt: von an einem neben das Gerüst 1 gefahrenen, auf einer Palette 30 angeordneten Stapel 31, dessen einzelne Glasscheiben 26 dicht nebeneinander angeordnet sind, wobei die Scheibenebenen schräg zur Vertikalen ausgerichtet sind, sollen die Glasscheiben 26 nacheinander abgenommen und auf einen nicht dargestellten, unter dem Gerüst 1 befindlichen Horizontalförderer abgelegt werden. Die Transportebene des Horizontalförderers befindet sich in Höhe der in den Fig. 1 und 2 an den Saugern 20 hängenden Glasscheibe 26. Während des Entstapelns soll die relative Zuordnung der jeweiligen Oberseiten der Glasscheiben 26 nicht verändert werden.

Zum Entstapeln werden zunächst die Kurbelarme 11, 12 in die mit strichpunktierten Linien dargestellte, im wesentlichen vertikale Endstellung gefahren. Dabei werden die Schubstangen 15, 16 nach Maßgabe der Führung durch ihre Führungsstangen 22 in den Drehschiebegelenken 23, 24 in eine gegenüber der Horizontalen leicht geneigte Lage gebracht. Dementsprechend nimmt der an den Enden der Schubstangen 15, 16 befestigte Rahmen 17 mit den Saugern 20 eine Schräglage zur Vertikalen ein. Diese Schräglage entspricht im wesentlichen der Schräglage des Stapels 31. Wenn die Saugerebene nicht vollständig mit der Ebene der obersten Glasscheibe des Stapels 31 übereinstimmt, können entsprechende Toleranzen durch Betätigen des Hubzylinders 19 ausgeglichen werden.

Die Vorrichtung wird durch Betätigen des Antriebsmotors 6 für den Transferwagen 4 zusammen mit dem Transferwagen 4 gegen den Stapel 31 gefahren, bis die Sauger 20 die oberste Glasscheibe des Stapels 31 erfassen können. Der Antriebsmotor 6 weist eine zugeordnete Steuerung auf, die im einzelnen nicht dargestellt ist.

Wenn die Sauger 20 die oberste Glasscheibe des Stapels 31 erfaßt haben und eine entsprechende Rückmeldung von einem im Bereich der Unterdruckquelle angeordneten Sensor erfolgt ist, wird der Antriebsmotor 9 betätigt, der die Kurbeln 11, 12 in Gegenuhrzeigersinn bis in die mit durchgezogenen Linien dargestellte horizontale Endlage schwenkt.

Mit Rücksicht auf die Kinematik des aus Kurbelstangen 11, 12 und in Drehschiebegelenken 23, 24 geführten Schubstangen 15, 16 gebildeten Getriebes wird die jeweils oberste Glasscheibe des Stapels 31 zu Beginn des Entstapelns im wesentlichen in Richtung ihrer Scheibenebene bewegt und erst dann vom Stapel 31 abgehoben sowie im folgenden in die horizontale Endstellung geschwenkt. Die durch das Getriebe vorgegebene Kinematik sorgt außerdem dafür, daß die Ränder der Glasscheibe 26 während der Bewegung weder den Stapel 31 noch den Boden der Palette 30 noch den Horizontalförderer berühren. Erst wenn die vom Stapel 31 abgenommene Glasscheibe 26 ihre horizontale Endstellung im wesentlichen erreicht hat, wird diese auf den Horizontalförderer abgesenkt, so daß die Sauger 20 von der Glasscheibe 26 gelöst werden können. — Falls vom Horizontalförderer herangeführte Glasscheiben aufgespapelt werden sollen, laufen die Bewegungsvorgänge umgekehrt ab.

Wie man der Darstellung der Fig. 1 und 2 entnimmt, kann die Palette 30 mit dem Stapel 31 nicht nur auf der in Fig. 1 linken Seite des Gerüstes 1 abgestellt werden, sondern auch auf der rechten Seite. Dann braucht die Vorrichtung insgesamt nur um 180 Grad gedreht zu werden. Das wird durch Betätigen des Antriebsmotors 7 für den Drehkranz 5 erreicht. Das Entstapeln bzw. Aufstapeln läuft dann wie oben beschrieben ab.

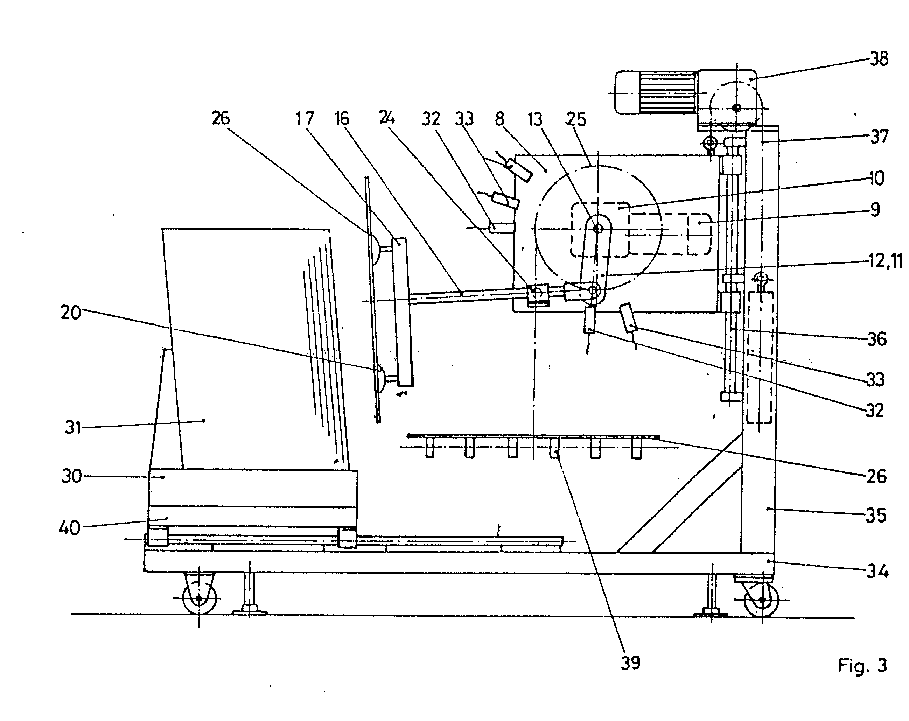

Bei der in Fig. 3 dargestellten Ausführungsform bezeichnen gleiche Bezugszeichen gleiche Teile. Die Vorrichtung ist im wesentlichen identisch aufgebaut wie die in den Fig. 1 und 2 dargestellte. Allerdings besitzen die Schubstangen 15, 16 keine Führungsstangen, sondern sind unmittelbar in den durch Schiebelagern 23 bzw. 24 achsial verschieblich geführt. Außerdem sind am Gehäuse 8 Endschalter 32 angeordnet, die von den Kurbeln 11, 12 unmittelbar betätigt werden und die außerdem längs des Kurbelkreises 25 verstellbar sind. Zusätzliche, längs des Kurbelkreises 25 angeordnete und verstellbare Schalter 33 steuern weitere Funktionen.

Außerdem sind bei der in Fig. 3 dargestellten Ausführungsform die Sauger 20 unmittelbar am Rahmen 17 befestigt.

Die gesamte Vorrichtung ist auf einem fahrbaren Gestell 34 montiert, das einen Ständer 35 aufweist, an dem das Gehäuse 8 mit den Kurbeln 11, 12 und Schubstangen 15, 16 sowie Rahmen 17 und Saugern 20 höhenverstellbar gehalten ist. Dazu ist das Gehäuse 8 an den Stangen 36 geführt, die am Ständer 35 befestigt sind und sich parallel zu diesem erstrecken. Im übrigen ist das Gehäuse 8 an Tragseilen 37 aufgehängt, die von einer Winde 38 aufgewickelt oder nachgelassen werden können.

Unterhalb der Vorrichtung befindet sich auf dem Gestell ein höhenverstellbarer Fördererabschnitt 39 und daneben eine Plattform 40 zum Absetzen der Palette 30 mit dem Stapel 31. Die Plattform 40 ist in Richtung auf den Ständer 35 und damit in Richtung auf die Vorrichtung zum Aufstapeln bzw. Entstapeln verstellbar.

Die in Fig. 3 dargestellte Vorrichtung kann an das Ende jeden beliebigen Förderers herangefahren werden. Der Fördererabschnitt 39 wird dann bis in die Höhe des weiterführenden Förderers verstellt. Der Stapel 31 einer auf der Plattform 40 abgestellten Palette 30 wird dann wie oben beschrieben entstapelt, wobei die Plattform 40 zunächst soweit in Richtung auf den Ständer 35 verstellt wird, daß die oberste Glasscheibe 26 des Stapels 31 von den Saugern 20 erfaßt werden kann. Wenn die oberste Glasscheibe vom Stapel 31 abgenommen ist, wird die Plattform 40 um eine Scheibenstärke in Richtung auf den Ständer 35 zugestellt.

## Patentansprüche

1. Vorrichtung zum Manipulieren, insbesondere zum Aufstapeln von Gegenständen, insbesondere Glasscheiben, mit wenigstens einem an einem Rahmen (17) angeordneten Greifwerkzeug (Sauger 20), das zwischen einer im wesentlichen horizontalen Endstellung und einer im wesentlichen vertikalen Endstellung durch Schwenken und Verschieben hin- und herbeweglich ist, wobei als Antrieb für den Rahmen mindestens eine Kurbel (11, 12) mit zugeordneter Schubstange (15, 16) vorgesehen ist und der Rahmen fest mit der Schubstange (15, 16) verbunden ist, dadurch gekennzeichnet, daß die Schubstange (15, 16) am Ende der Kurbel (11, 12) schwenkbar gelagert ist und daß die Schubstange (15, 16) längsverschieblich in einem Drehgelenk (23, 24) mit außerhalb des Kurbelkreises (25) angeordneter Drehachse gelagert ist.

2. Vorrichtung nach Anspruch 1, dadurch gekennzeichnet, daß die Kurbel (11, 12) in einem Koordinatensystem, dessen Koordinatenmittelpunkt auf der Kurbelachse (13) liegt, eine hin- und hergehende Drehbewegung zwischen 0 Grad und ca. 270—300 Grad ausführt, wobei die horizontale Endlage der Kurbel (11, 12) der horizontalen Endstellung der Sauger (20) und die im wesentlichen vertikale Endlage der Kurbel (11, 12) der im wesentlichen vertikalen Endstellung der Sauger (20) entspricht.

3. Vorrichtung nach Anspruch 1 oder 2, dadurch gekennzeichnet, daß wenigstens der horizontale Abstand des Drehgelenkes (23, 24) von der vertikalen Koordinatenachse gleich dem Kurbelradius ist.

4. Vorrichtung nach einem der Ansprüche 1—3, dadurch gekennzeichnet, daß der vertikale Abstand des Drehgelenkes (23, 24) von der horizontalen Koordinatenachse gleich dem 1,0 bis 1,2fachen des Kurbelradius ist.

5. Vorrichtung nach Anspruch 4, dadurch gekennzeichnet, daß der vertikale Abstand gleich dem 1,117fachen des Kurbelradius ist.

6. Vorrichtung nach einem oder mehreren der Ansprüche 1—5, dadurch gekennzeichnet, daß der Abstand der Saugerebene vom Kurbelzapfen (14) ungefähr das 3,25fache des Kurbelradius ist.

7. Vorrichtung nach einem oder mehreren der Ansprüche 1—6, gekennzeichnet durch Endschalter (32) und/oder Anschläge (27) für die Endlagen der Kurbeln (11, 12).

8. Vorrichtung nach einem oder mehreren Ansprüchen 1—7, dadurch gekennzeichnet, daß die Sauger (20) an einem Stellrahmen (18) angebracht sind, der seinerseits um eine zur Kurbelachse (13) parallele Achse schwenkbar am Rahmen (17) gelagert ist, und daß zwischen Rahmen (17) und Stellrahmen (18) eine Stelleinrichtung (19) angeordnet ist.

9. Vorrichtung nach einem oder mehreren der Ansprüche 1—8, dadurch gekennzeichnet, daß die Kurbel (11, 12) einen Antrieb (9) aufweist, der in Abhängigkeit von der jeweiligen Kurbellage und von einem vorgebbaren Programm regelbar ist.

10. Vorrichtung nach Anspruch 9, gekennzeichnet durch eine mit der Kurbel (11, 12) gekoppelte Kurvenscheibe als Sollwerteingabe für den Regler.

11. Vorrichtung nach einem oder mehreren der Ansprüche 1—10, gekennzeichnet durch ein Gerüst (1) mit einem daran verfahrbaren Transferwagen (4) für den am Transferwagen (4) aufgehängten Kurbelmechanismus mit Rahmen (17) und Saugern (20).

12. Vorrichtung nach Anspruch 11, dadurch gekennzeichnet, daß zwischen Transferwagen (4) und Kurbelmechnismus ein Drehgelenk (5) mit vertikaler Drehachse angeordnet ist.

13. Vorrichtung nach einem oder mehreren der Ansprüche 1—10, gekennzeichnet durch ein fahrbares Gestell (34) mit einem Ständer (35) für den daran angeordneten und vertikal verstellbaren Kurbelmechanismus mit Rahmen (17) und Saugern (20).

14. Vorrichtung nach Anspruch 13, dadurch gekennzeichnet, daß am Gestell (34) ein höhenverstellbarer Fördererabschnitt (39) angeordnet ist.

15. Vorrichtung nach Anspruch 13 oder 14, dadurch gekennzeichnet, daß das Gestell (34) eine Plattform (40) zur Aufnahme eines palettierten Stapels (31) aufweist und daß die Plattform (40) in Richtung auf die in vertikaler Endstellung befindlichen Sauger (20) zustellbar ist.

## Claims

1. A device for manipulation, particularly for stacking and destacking of objects, especially glass panes, with at least one gripping attachment (suction boxes 20) placed on a frame (17), said gripping attachment being reciprocating, movable by slewing and translating between a substantially horizontal end position and a substantially vertical end position, in which at least one crank (11, 12) with associated connecting rod (15, 16) is provided as a drive for the frame and the frame being rigidly connected with the connecting rod (15, 16), characterized in that the connecting rod (15, 16) is swivel-mounted at the end of the crank (11, 12) and that the connecting rod (15, 16) is mounted longitudinally movable at a revolute joint (23, 24) with an axis of rotation arranged outside the crank circle (25).

2. A device for manipulation according to claim 1, characterized in that the crank (11, 12) performs a reciprocating rotary movement between zero (0) and approx. 270 to 300 degrees in a coordinate system, the coordinate center of which is located on the crank axis (13), in which the horizontal end position of the crank (11, 12) corresponds to the horizontal end position of the suction boxes (20) and the substantially vertical end position of the crank (11, 12) corresponds to the substantially vertical end position of the suction boxes (20).

3. A device for manipulation according to claim 1 or claim 2, characterized in that at least the horizontal distance of the revolute joint (23, 24) from the vertical coordinate axis is equal to the crank radius.

4. A device for manipulation according to claim 1 or claim 2 or claim 3, characterized in that the vertical distance of the revolute joint (23, 24) from the horizontal coordinate axis is equal to the 1.0- up to the 1.2-fold of the crank radius.

5. A device for manipulation according to claim 4, characterized in that the vertical distance is equal to the 1.117-fold of the crank radius.

6. A device for manipulation according to one or several of the proceding claims, characterized in that the distance of the suction boxes plane from the crank stud (14) is approximately the 3.25-fold of the crank radius.

7. A device for manipulation according to one or several of the preceding claims, characterized by a limit switch (32) and/or limit stops (27) for the end positions of the cranks (11, 12).

8. A device for manipulation according to one or several of the preceding claims, characterized in that the suction boxes (20) are fixed on an adjusting frame (18), said adjusting frame for its part being swivel-mounted about an axis parallel with the crank axis (13) on the frame (17) and that an adjusting device (19) is arranged between the frame (17) and the adjusting frame (18).

9. A device for manipulation according to one or several of the preceding claims, characterized in that the crank (11, 12) is provided with a drive (9) the speed of which is controllable in dependence on the actual position of the crank and on a preset program.

10. A device for manipulation according to claim 9, characterized by a cam disk coupled with the crank (11, 12) for set-point adjustment of the controlling unit.

11. A device for manipulation according to one or several of the preceding claims, characterized by a framework (1) with a transfer carriage (4) for the crank mechanism with the frame (17) and the suction boxes (20) being suspended from the transfer carriage (4).

12. A device for manipulation according to claim 11, characterized in that a revolute joint (5) with vertical axis of revolution is provided between the transfer carriage (4) and the crank mechanism.

13. A device for manipulation according to one or several of the preceding claims, characterized by a travelling framing (34) including a standard (35) for supporting the crank mechanism with the frame (17) and the suction boxes (20) being arranged at and vertically movable on said standard.

14. A device for manipulation according to claim 13, characterized in that a vertically adjustable conveyor part (39) is placed on the framing (34).

15. A device for manipulation according to claim 13 or claim 14, characterized in that the framing (34) is provided with a platform (40) for reception of a palletized stack (31) and that the platform (40) can be advanced in the direction towards the suction boxes (20) which are in the vertical end position.

## Revendications

1. Dispositif de manipulation, notamment pour empiler des objets, notamment des plaques de verre, comportant au moins un outil de préhension (suceur 20) disposé sur un cadre (17), lequel outil peut être déplacé dans un sens et dans l'autre entre une position terminale sensiblement horizontale et une position terminale sensiblement verticale, par basculement et coulissement, une manivelle au moins (11, 12) associée à une tige de poussée (15, 16) étant prévue comme entraînement pour le cadre et le cadre étant solidaire de la tige de poussée (15, 16), caractérisé en ce que la tige de poussée (15, 16) est montée pivotante à l'extrémité de la manivelle (11, 12) et que la tige de poussée (15, 16) est montée de façon à se déplacer longitudinalement dans une articulation de pivotement (23, 24) dont l'axe de rotation est disposé en dehors de la trajectoire de manivelle (25).

2. Dispositif selon la revendication 1, caractérisé en ce que la manivelle (11, 12) se trouve dans un système de coordonnées dont le centre se trouve sur l'axe de la manivelle et effectue un mouvement rotatif dans un sens et dans l'autre entre 0 degré et environ 270—300 degrés, la position terminale horizontale de la manivelle (11, 12) correspondant à la position terminale horizontale des suceurs (20), et la position terminale sensiblement verticale de la manivelle (11, 12) correspondant à la position terminale sensiblement verticale des suceurs (20).

3. Dispositif selon la revendication 1 ou 2, caractérisé en ce qu'au moins la distance horizontale entre l'articulation de pivotement (23, 24) et l'axe de coordonnées vertical est égale au rayon de la manivelle.

4. Dispositif selon l'une des revendications 1 à 3, caractérisé en ce que la distance verticale entre l'articulation de pivotement (23, 24) et l'axe de coordonnées horizontal est égale à 1,0 à 1,2 fois le rayon de la manivelle.

5. Dispositif selon la revendication 4, caractérisé en ce que la distance verticale est égale à 1,117 fois le rayon de la manivelle.

6. Dispositif selon l'une ou plusieurs des revendications 1 à 5, caractérisé en ce que la distance entre le plan des suceurs et le tourillon de manivelle (14) est sensiblement égale à 3,25 fois le rayon de la manivelle.

7. Dispositif selon l'une ou plusieurs des revendications 1 à 6, caractérisé par des interrupteurs de fin de course (32) ou des butées (27) pour les positions terminales des manivelles (11, 12).

8. Dispositif selon l'une ou plusieurs des revendications 1 à 7, caractérisé par le fait que les suceurs (20) sont fixés sur un cadre de réglage (18) qui, de son côté, est monté pivotant autour d'un axe parallèle à l'axe de la manivelle (13) sur le cadre (17), et qu'entre le cadre (17) et le cadre de réglage (18) est disposé un dispositif de réglage (19).

9. Dispositif selon l'une ou plusieurs des revendications 1 à 8, caractérisé en ce que la manivelle (11, 12) comporte un entraînement (9) qui peut être réglé en fonction de la position de la manivelle et d'un programme prédéterminé.

10. Dispositif selon la revendication 9, caractérisé par un disque-came couplé à la manivelle (11, 12) en tant qu'entrée de valeur de consigne pour le régulateur.

11. Dispositif selon l'une ou plusieurs des revendications 1 à 10, caractérisé par un bâti (1) sur lequel peut se déplacer un chariot de transfert (4) pour le mécanisme de manivelles avec le cadre (17) et les suceurs (20) suspendu au chariot de transfert (4).

12. Dispositif selon la revendication 11, caractérisé en ce qu'entre le chariot de transfert (4) et le mécanisme de manivelles est disposée une articulation de pivotement (5) à axe vertical.

13. Dispositif selon l'une ou plusieurs des revendications 1 à 10, caractérisé par un bâti déplaçable (34) comportant un support (35) pour le mécanisme de manivelle avec le cadre (17) et les suceurs (20) qui y est disposé.

14. Dispositif selon la revendication 13, caractérisé en ce qu'une portion de transporteur (39) réglable en hauteur est disposée sur le bâti (34).

15. Dispositif selon la revendication 13 ou 14, caractérisé en ce que le bâti (34) présente une plateforme (40) pour recevoir une pile (31) palettisée et que la plateforme (40) peut être avancée en direction des suceurs se trouvant en position terminale verticale.

Fig.1

Fig. 2

Fig. 3